# EUROPEAN PATENT SPECIFICATION

(11) **EP 0 587 011 B1**
(45) Date of publication and mention of the grant of the patent: **29.07.1998**
(21) Application number: 93113858.0
(22) Date of filing: 30.08.1993
(51) Int. Cl.: G06K 7/08, G06K 19/06, B32B 3/10

(54) **Memory card using IC and manufacturing method thereof**
Speicherkarte mit IC und Verfahren zur Herstellung derselben
Carte de mémorisation et procédé pour la fabriquer

(30) Priority: 31.08.1992 JP 257510/92; 29.01.1993 JP 34890/93
(43) Date of publication of application: 16.03.1994
(73) Proprietor: SONY CHEMICALS CORPORATION, Kanuma-shi, Tochigi (JP)
(72) Inventor: Suzuki, Hiroshi, Kanuma-shi, Tochigi (JP); Hishinuma, Hiroyuki, Kanuma-shi, Tochigi (JP); Saito, Masao, Kanuma-shi, Tochigi (JP); Oike, Hideshi, Kanuma-shi, Tochigi (JP)
(74) Representative: Müller, Frithjof E., Dipl.-Ing.

(56) References cited:
- EP-A- 0 246 744
- EP-A- 0 469 762
- US-A- 4 719 140
- US-A- 4 960 983
- DATABASE INSPEC (IEEE), no. 88:3152842, DERWENT PUBLICATIONS, LTD., London, GB

## Description

### BACKGROUND OF THE INVENTION

### Field of the Invention:

The present invention relates to a memory card using IC (integrated circuit) in which a card can be formed with a predetermined uniform thickness and a manufacturing method thereof.

### Description of the Related Art:

Various IC cards such as ID (identification) cards for security, ID cards for transportation, ID cards for communication or the like are now commercially available on the market. IC cards are generally referred to as data carrier. The IC card includes therein a coil for transmitting and receiving electromagnetic energy or information. When the IC cards are in use, it is customary that the electromagnetic energy transmission and reception coil is used as a reception antenna to receive information from a host system and to convert the same into data which is then accumulated in a memory. Also, this electromagnetic energy transmission and reception coil is used as a transmission antenna to transmit information to the host system.

As the aforesaid conventional transmission and reception coil is used such one around which round wires are wound. Meanwhile, as a manufacturing method of such IC card which incorporates therein such transmission and reception coil, a thermoplastic resin is molded in card shape by an injection molding process as a structure material or thermoplastic resin that accommodates therein coils or other electronic parts is molded as a card-like shape by a hot press treatment.

In order to make IC cards become easier to handle, there are some requirements that IC cards should be uniform in thickness and perfectly smooth in surface.

According to the aforesaid conventional manufacturing method, since the thermoplastic resin is molded as a card-like shape by the heating and press treatment, card products tend to become warped and uneven on the surface. Besides, if IC cards having uniform thickness and smooth surface are to be manufactured, there would be then the problem that productivity of such IC cards is not increased.

Further, it is difficult to manufacture a thin transmission and reception coil with a predetermined thickness by utilizing round wires. Consequently, IC cards cannot be manufactured with a predetermined uniform thickness without difficulty. Furthermore, a transmission and reception coil that utilizes round wires cannot be formed as a so-called tapless structure. Therefore, when a thin IC card is manufactured with a predetermined thickness, a connection of the transmission and reception coil to a circuit cannot be improved in reliability.

### OBJECTS AND SUMMARY OF THE INVENTION

Therefore, it is a general object of the present invention to provide an improved IC card and a manufacturing method thereof in which the aforesaid shortcomings and disadvantages encountered with the prior art can be eliminated.

More specifically, it is an object of the present invention to provide a memory card using IC and a manufacturing method thereof in which IC cards can be manufactured with predetermined uniform thickness at high productivity.

Another object of the present invention is to provide a memory card using IC and a manufacturing method thereof in which a connection of a transmission and reception coil incorporated within an IC card can be improved in reliability.

According to a first aspect of the present invention, a coil around which rectangular wires are wound is utilized as a transmission and reception coil that is incorporated into an IC card.

According to a second aspect of the present invention, there is provided a method of manufacturing an IC card which comprises the steps of fixing electronic parts on an insulating base material, disposing a spacer on an outer peripheral portion of the insulating base material, filling an ultraviolet ray curing resin into the insulating base material at its inside surrounded by the spacer, disposing a transparent film or transparent plate on the ultraviolet ray curing resin, and radiating the ultraviolet ray curing resin with ultraviolet rays so that the ultraviolet ray curing resin is cured.

In accordance with a third aspect of the present invention, IC cards can be manufactured with predetermined uniform thickness at high productivity. In this case, if the coil around which rectangular wires are wound is utilized as the transmission and reception coil, then the transmission and reception coil can be improved in reliability when connected to the circuit. Also, the transmission and reception efficiency of such coil can be enhanced.

The above and other objects, features, and advantages of the present invention will become apparent from the following detailed description of illustrative embodiments thereof to be read in conjunction with the accompanying drawings, in which like reference numerals are used to identify the same or similar parts in the several views.

### BRIEF DESCRIPTION OF THE DRAWINGS

FIGS. 1A through 1H are schematic diagrams showing a manufacturing method according to an embodiment of the present invention, respectively;
FIG. 2 is a schematic diagram used to explain a different manufacturing method according to the present invention;
FIG. 3 is a plan view of a coil around which rectangular wires are wound;
FIG. 4 is a cross-sectional view taken along the line IV - IV in FIG. 3;
FIG. 5 is a diagram used to explain a method of connecting the coil around which the rectangular wires are wound to a circuit;
FIG. 6 is a plan view illustrative of a coil around which round wires are wound;
FIG. 7 is a cross-sectional view taken along the line VII - VII in FIG. 6;
FIG. 8 is a fragmentary cross-sectional view illustrating in an enlarged scale a coil around which rectangular wires are wound and
FIG. 9 is a fragmentary cross-sectional view illustrating in an enlarged scale a coil around which round wires are wound.

### DETAILED DESCRIPTION OF THE PREFERRED EMBODIMENTS

Prior to describing preferred embodiments, let us summarize the gist of the present invention as follows.

The inventors of this application had discovered the following facts and finished the present invention: If a UV (ultraviolet) ray curing resin is utilized as a resin that serves as a material for forming an IC card, then it is possible to solve the problems caused when a thermoplastic resin is utilized, such as warping, uneven card surface or the like. Further, if a transmission and reception coil is manufactured by utilizing rectangular wires, then the transmission and reception coil can be made thin with a predetermined thickness easily. In addition, the transmission and reception coil can be arranged as a so-called tap-less structure so that the transmission and reception coil can be improved in reliability when connected to a circuit.

The IC card of this invention includes the coil around which rectangular wires are wound as the transmission and reception coil. Such coil can be easily manufactured to be thin with a predetermined thickness precisely. Therefore, it becomes possible to manufacture a thin IC card with a predetermined thickness. Further, when the coil around which the rectangular wires are wound is connected to a circuit disposed within the IC card, the coil can be arranged as the so-called tap-less structure and therefore mounted in a so-called surface-mount fashion, thereby increasing the productivity of IC card. Besides, the transmission and reception coil can be improved in reliability when connected to the circuit. Furthermore, since the coil around which the rectangular wires are wound produces high Q as compared with a coil around which round wires are wound under the condition that the two coils are the same in volume and the number of turns, the transmission and reception coil can be enhanced in transmission and reception efficiency.

Moreover, since the IC card manufacturing method of the present invention utilizes an ultraviolet ray curing resin, a heating and press process that is required when a thermoplastic resin is utilized becomes unnecessary. Further, when the ultraviolet ray curing resin is filled, i.e., the liquid ultraviolet ray curing resin that is not yet cured is filled into the inside of the insulating base material, electronic parts within the IC card is unavoidably buried into the ultraviolet ray curing resin. In that case, various electronic parts of different shapes are uniformly buried into the ultraviolet ray curing resin so that the surface of the IC card after the electronic parts had been buried into the ultraviolet ray curing resin becomes flat. Therefore, the IC card can be manufactured with a predetermined uniform thickness and the surface thereof can be made uniform with ease. Thus, a thin IC card can be produced with a predetermined thickness at high productivity inexpensively.

Furthermore, in accordance with the manufacturing method of the present invention, the film or plate that is disposed on the ultraviolet ray curing resin is transparent and the ultraviolet ray curing resin also remains transparent after it had been cured. Therefore, even after the ultraviolet ray curing resin had been molded as the card shape, electronic parts and so forth disposed within the IC card can be visually inspected from the outside.

Embodiments of the present invention will now be described with reference to the drawings. In this case, like reference numerals are used to identify the same or similar parts and elements in the several views.

### Embodiment 1

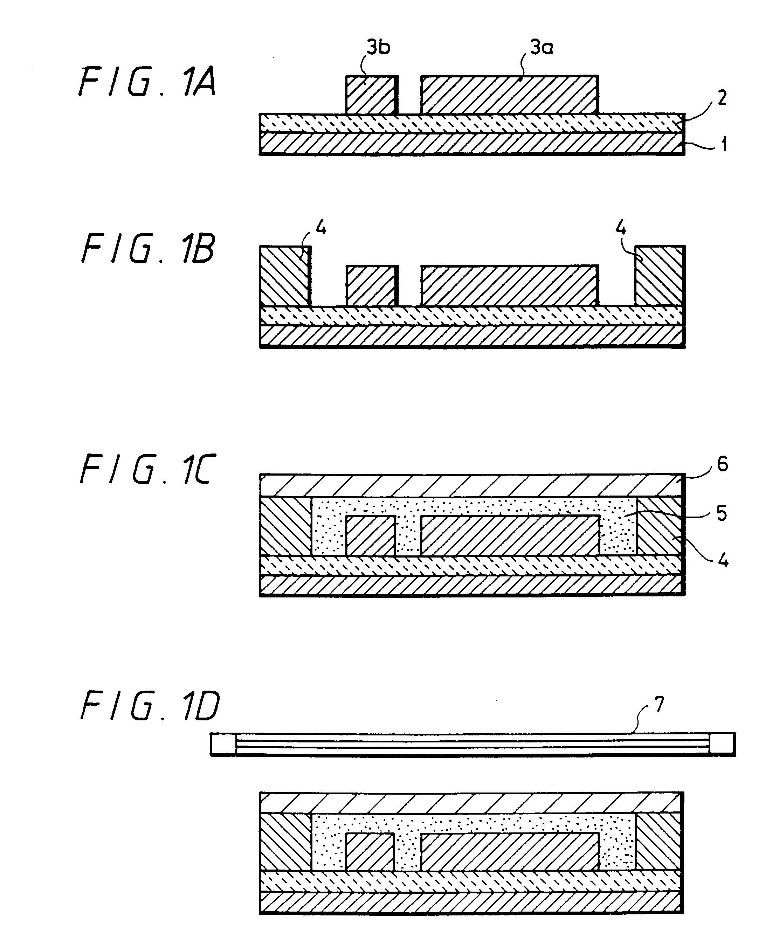

An IC card was manufactured in accordance with manufacturing processes shown in FIGS. 1A through 1H of the accompanying drawings. A PET (polyethylene terephthalate) film (manufactured by TEIJIN LTD., under the trade name of U2W-100µ) 1 was utilized as an insulating base material. On the PET film 1 were fixed a transmission and reception coil 3a and other electronic parts 3b at 150°C for 12 minutes by utilizing a UV (ultraviolet) anaerobic adhesive (manufactured by THREE BOND CO. LTD., under the trade name of 3062D) 2, as shown in FIG. 1A. The transmission and reception coil 3a and other electronic parts 3b were all less than 400 µm in thickness.

Then, a spacer 4 that defines the thickness of the IC card was provided around an outer peripheral portion of the PET film 1 by means of the similar adhesive 2 that was used to fix the electronic parts 3b, as shown in FIG. 1B. A vinylchloride film (manufactured by TAIHEI CHEMICALS LTD., under the trade name of EVILON 702-400µ) was utilized as the spacer 4.

An ultraviolet ray curing liquid resin (manufactured by SONY CHEMICALS CORP., under the trade name of UV1003) 5 was injected into the portion surrounded by the spacer 4 up to the height of the spacer 4 by a dispenser (not shown), whereby the electronic parts 3a, 3b were buried by the ultraviolet ray curing liquid resin 5. On the ultraviolet ray curing liquid resin 5 was disposed a transparent PET film (manufactured by TEIJIN LTD., under the trade name of HPJ-100) 6 which was progressively laminated to eliminate an air from the end thereof, as shown in FIG. 1C.

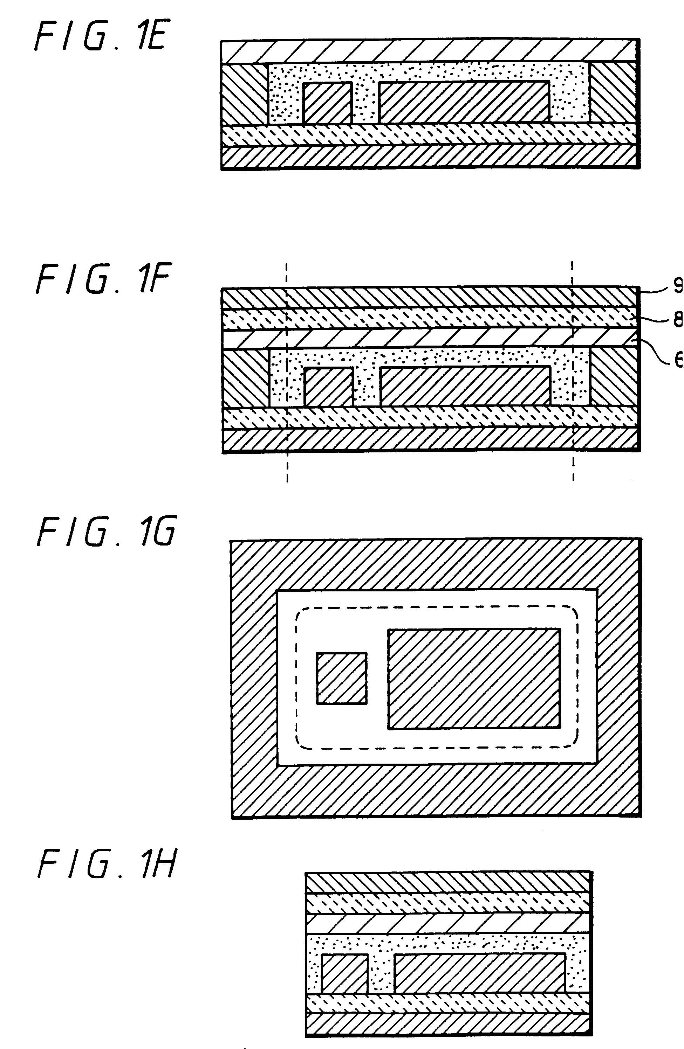

The product shown in FIG. 1C was sandwiched by 2-mm thick plate glasses (not shown) and treated under radiation of ultraviolet rays by a UV lamp (80W/second) 7 from the height of 15 cm for 20 seconds as shown in FIG. 1D, whereby the ultraviolet ray curing liquid resin 5 was cured (see FIG. 1E).

Thereafter, by utilizing an adhesive 8, a decorative surface material (PET film manufactured by TEIJIN LTD., under the trade name of U2W-125µ) 9 was bonded to the transparent PET film 6 (see FIG. 1F). FIG. 1G is a schematic plan view illustrating the condition that the decorative surface material 9 had been bonded to the transparent PET film 6 by using the adhesive 8.

A portion shown by dashed lines in FIGS. 1F, 1G is cut by an edged mold to produce an IC card of a predetermined card size (see FIG. 1H). The IC card thus obtained was 0.76 mm in thickness that conforms to the JIS (Japanese Industrial Standard) standards. Also, this IC card was not warped, but smooth in surface and finished satisfactorily.

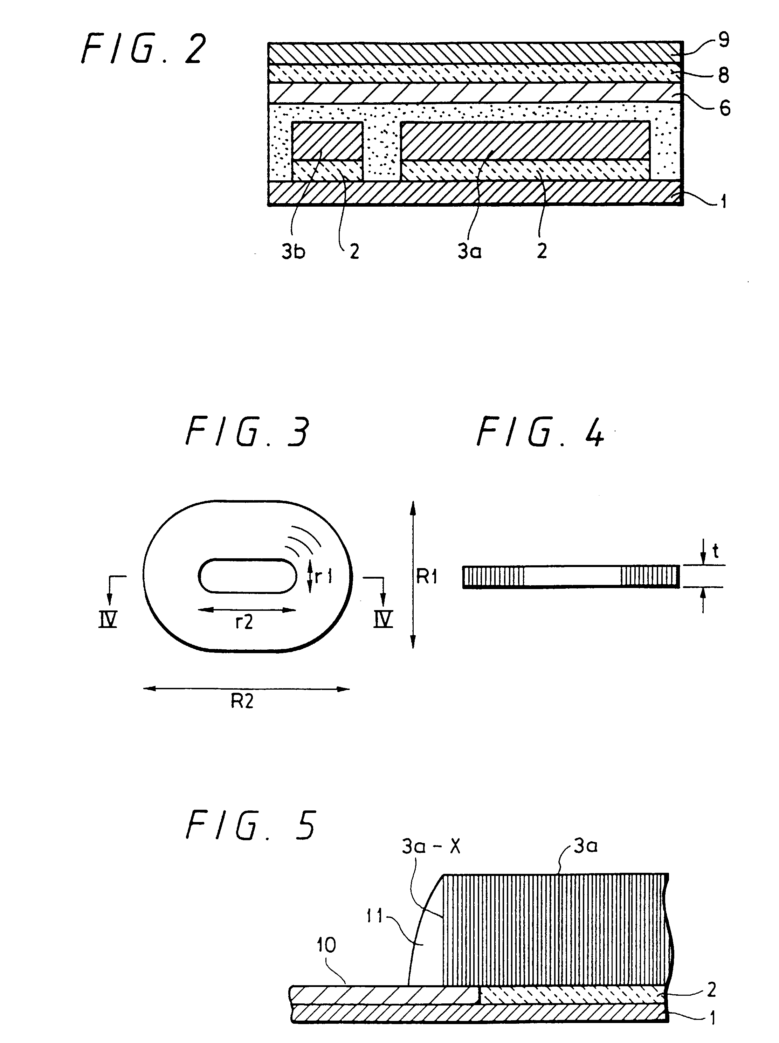

While the IC card manufacturing method of the present invention was described so far, the present invention is not limited thereto and various manufacturing methods are possible. By way of example, while the transparent PET film 6 stretched over the ultraviolet ray curing resin 5 was left in the final form of the IC card as described above, the present invention is not limited thereto and the transparent PET film 6 might be stripped after the ultraviolet ray curing resin had been cured. If the transparent PET film 6 is removed, it could be preferable that the transparent PET film 6 has at least one of the surface which has low-adhesive coatings. While the adhesive 2 is uniformly coated on the insulating base material 1 when the electronic parts 3a, 3b are fixed to the insulating base material 1 as described above, the present invention is not limited thereto and such a variant is also possible that, as shown in FIG. 2, the adhesive 2 is coated only on the lower portions of the respective fixed electronic parts 3a, 3b to fix the electronic parts 3a, 3b.

### Embodiment 2

As a transmission and reception coil incorporated within an IC card (sizes: 54 x 86 x 0.76 mm) was manufactured a coil that utilizes rectangular wires. More specifically, as rectangular wires that were wound around the coil, there was utilized a hard copper wire (diameter: 0.2 mm) as a starting round wire. This round wire was rolled as a rectangular wire of 0.075 x 0.35 mm on which an epoxy-based insulating layer (thickness: 1.5 µm) and an epoxy-based melt-bonding layer (thickness: 1.0 µm) was formed by the coating process. The rectangular wire thus formed was wound around an outer form of coil shown in FIG. 3 by utilizing a coil winding machine (not shown). The outer form of coil is such that an inner diameter r1 was 9 mm, an inner diameter r2 was 30 mm, an outer diameter R1 was 45 mm, an outer diameter R2 was 65 mm and that a coil thickness t was 0.35 mm. The conditions that the coil was wound around the outer form of coil were as follows:

| | |
|---|---|
| Number of turns | 200 |
| Winding speed | 600 r.p.m. |
| Winding tension | 100g |
| Wire fixing method | heating by current (time of heating by current: 3 minutes with the application of voltage of 70V and current of 1A) |

An inductance and Q of the thus obtained coil were measured at frequency of 135 kHz. Study of measured results reveals that the inductance is 1.9mH and Q is 70, which exhibits an excellent quality of coil. Further, when the thickness t of the coil was measured precisely, the thickness t was in a range of from 0.35 ± 0.05 mm and it was confirmed that the fluctuation of coil sizes was extremely small.

Then, an IC card was produced by utilizing this coil. In this case, as shown in FIG. 5, the coil 3a was fixed to a copper foil circuit (50 µm-thick) 10 formed on the rigid insulating base material (200 µm-thick) 1 at its predetermined position by the adhesive 2 together with an IC module (not shown), and a terminal 3a-x of the coil 3a and a terminal of the IC module were connected by a solder 11. Other portions were formed by an ordinary method and thereby the IC card was manufactured. The surface of the resultant IC card was not irregular in spite of the coil 3a incorporated therein and was finished satisfactorily.

### Comparative example 1

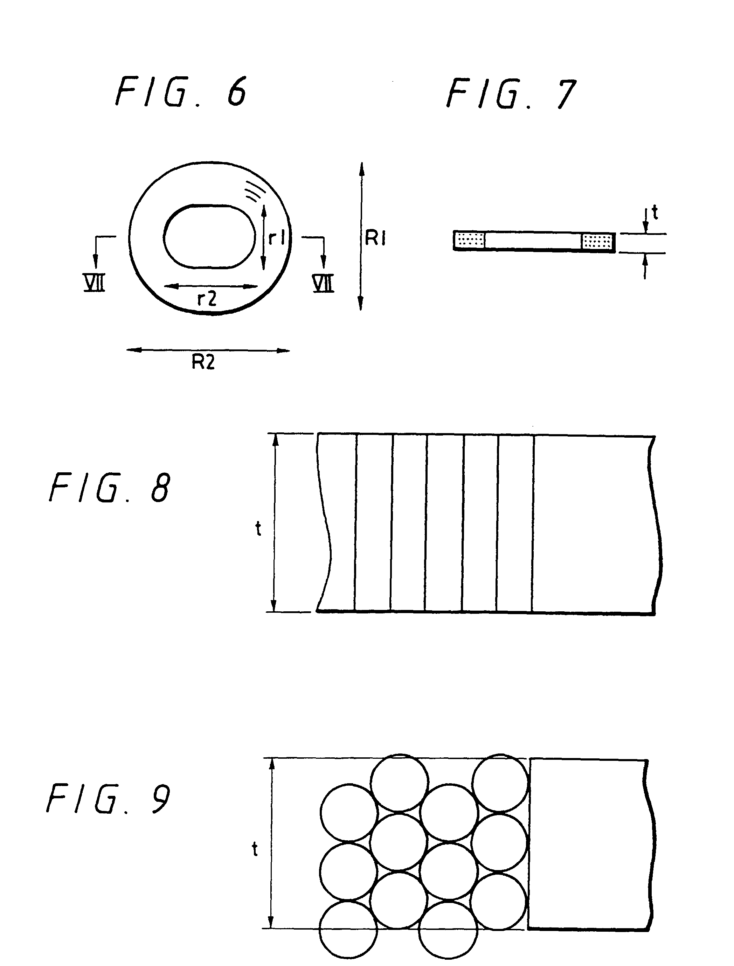

Instead of rectangular wires, round wires were utilized to form a coil (220 turns) similarly to the embodiment 2. In this case, as the round wires were utilized polyurethane wires (magnet wire of diameter, 0.12 mm manufactured by SUMITOMO DENSEN KABUSHIKI KAISHA). The round wires were wound around an outer form of coil (inner diameter r1 : 20 mm, inner diameter r2 : 30 mm, outer diameter R1 : 40 mm; outer diameter R2 : 50 mm and coil thickness t : 0. 4mm) shown in FIGS. 6 and 7.

When the inductance and Q of the resultant coil were measured similarly to the embodiment 2, the inductance was 2.2mH and Q was 43. Then, it was confirmed that the quality of coil was considerably deteriorated as compared with that of the embodiment 2. Further, having precisely measured the coil thickness t, it was to be noted that the coil thickness t was in a range of from 0.4 ± 0.12 mm and the sizes were fluctuated considerably.

The reason that the coil thickness t was fluctuated in the coil of the embodiments 1, 2 and in the coil of the comparative example 1 as described above will be described below.

That is to say, in the case of the coil on the comparative example 1, the size of the coil that was formed by collecting the round wires reflects the coil thickness t. Consequently, the size of the coil is fluctuated considerably as shown in FIG. 9. However, in the coil of the embodiment 2, the conductor size (0.075 x 0.35 (mm)) of the rectangular wire directly reflects the coil thickness t and hence the fluctuation of the size thereof becomes small as shown in FIG. 8.

According to the manufacturing method of the present invention, it becomes possible to manufacture the IC card with predetermined uniform thickness at high productivity. In this case, if the coil around which the rectangular wires are wound is utilized as the transmission and reception coil, then the transmission and reception coil can be improved in reliability when connected to the circuit. Also, the transmission and reception efficiency thereof can be enhanced.

Having described preferred embodiments of the invention with reference to the accompanying drawings, it is to be understood that the invention is not limited to those precise embodiments and that various changes and modifications could be effected therein by one skilled in the art without departing from the spirit or scope of the invention as defined in the appended claims.

## Claims

1. An IC card comprising a transmission and reception coil (3a) **characterized in that** said coil (3a) is wound with a wire having a rectangular cross-section.

2. A method of manufacturing an IC card comprising the steps of:
fixing electronic parts including a transmission and reception coil (3a) which is wound with a wire having a rectangular cross-section on an insulating base material (1);
disposing a spacer (4) on an outer peripheral portion of said insulating base material (1);
filling an ultraviolet ray curing resin (5) into said insulating base material (1) at its inside surrounded by said spacer (4);
disposing a transparent film (6) or transparent plate on said ultraviolet ray curing resin (5); and
radiating said ultraviolet ray curing resin (5) with ultraviolet rays so that said ultraviolet ray curing resin (5) is cured.

## Patentansprüche

1. IC-Karte mit einer Sende- und Empfangsspule (3a), **dadurch gekennzeichnet, dass** die Spule (3a) mit einem Draht mit rechteckigem Querschnitt gewickelt ist.

2. Verfahren zum Herstellen einer IC-Karte, das die folgenden Schritte umfasst:
- Befestigen elektronischer Teile einschließlich einer Sende- und Empfangsspule (3a), die aus einem Draht mit rechteckigem Querschnitt gewickelt ist, auf einem isolierenden Trägermaterial (1);
- Anordnen eines Abstandshalters (4) auf einem Außenumfangsabschnitt des isolierenden Trägermaterials (1);
- Einfüllen eines durch Ultraviolettstrahlung härtbaren Harzes (5) in das durch den Abstandshalter (4) umschlossene Innere des isolierenden Trägermaterials (1);
- Anordnen eines transparenten Films (6) oder einer transparenten Platte auf dem durch Ultraviolettstrahlung härtbaren Harz (5) ; und
- Bestrahlen des durch Ultraviolettstrahlung härtbaren Harzes (5) mit Ultraviolettstrahlung, so dass das durch Ultraviolettstrahlung härtbare Harz (5) gehärtet wird.

## Revendications

1. Carte à circuit intégré comprenant une bobine (3a) d'émission et de réception, caractérisée en ce que ladite bobine (3a) est bobinée avec un fil ayant une section transversale rectangulaire.

2. Procédé de fabrication d'une carte à circuit intégré comprenant les étapes :
de fixation d'éléments électroniques comprenant une bobine (3a) d'émission et de réception qui est bobinée avec un fil ayant une section transversale rectangulaire sur une matière de base isolante (1);
de disposition d'un écarteur (4) sur une partie périphérique extérieure de ladite matière de base isolante (1) ;
d'introduction d'une résine (5) durcissant aux rayons ultraviolets dans ladite matière de base isolante à l'intérieur de sa partie entourée par ledit écarteur (4) ;
de dépôt d'un film transparent, ou plaque transparente, (6) sur ladite résine (5) durcissant aux rayons ultraviolets ; et
de projection de rayons ultraviolets sur ladite résine (5) durcissant aux rayons ultraviolets de façon à faire durcir ladite résine (5) durcissant aux rayons ultraviolets.
